# EUROPEAN PATENT APPLICATION

(11) **EP 3 101 575 A1**
(43) Date of publication of application: **07.12.2016**
(21) Application number: 15761290.4
(22) Date of filing: 15.01.2015
(51) Int. Cl.: G06F 21/10, G06F 9/445, G06F 13/00

(54) **LICENSE INFORMATION MANAGEMENT DEVICE, LICENSE INFORMATION MANAGEMENT METHOD, AND PROGRAM**

(30) Priority: 14.03.2014 JP 2014052677
(71) Applicant: Omron Corporation, Kyoto-shi, Kyoto 600-8530 (JP)
(72) Inventor: ABE, Yutaka, Kyoto-shi Kyoto 600-8530 (JP); HIOKA, Takehiko, Kyoto-shi Kyoto 600-8530 (JP); KAWANOUE, Shinsuke, Kyoto-shi Kyoto 600-8530 (JP)
(74) Representative: Horn Kleimann Waitzhofer Patentanwälte PartG mbB
(86) International application number: PCT/JP2015/050878
(87) International publication number: WO 2015/136964

(57) **Abstract**

The computer (300) acquires, from the activation server (400), the information to use the program and the information to specify the number of units of the PLCs (100) capable of using the program, by one-time activation. The PLC (100) has the program installed from the computer (300). The number of units specified by the information is updated in such a way that the number of units of the PLCs (100) to which the computer (300) installs the program is subtracted from the number of units specified by the information.

## Description

### TECHNICAL FIELD

The present invention relates to a license information management device that manages the license information for using the program in each of the two or more control devices.

### BACKGROUND ART

In recent years, programs to be executed in a computer have come to be downloaded through networks, and to be activated by data downloaded through networks. For example, Japanese Unexamined Patent Publication No. 2002-132368 (Patent Document 1) discloses a version-up system for allowing only the number of units of devices, covered by the price paid by the purchaser of the firmware for the firmware to be newly stored, to download the firmware.

### PRIOR ART DOCUMENT

### PATENT DOCUMENT

Patent Document 1: Japanese Unexamined Patent Publication No. 2002-132368

### SUMMARY OF THE INVENTION

### PROBLEMS TO BE SOLVED BY THE INVENTION

By the way, as paragraph 0009 of Patent Document 1 describes as "The purchaser purchasing a plurality of the same models sends the secret number and the device identifier to the server so as to download the firmware program marked with the device identifier. By repeating the downloading for the number of times corresponding to the number of units of purchased devices, the version up firmware programs where the identifier of the model is embedded can be downloaded for the number of units of the devices.", conventionally, when a program is sought to be used in a plurality of devices, there has been a problem that the work of the download and the like is needed for each of the plurality of devices, which is troublesome.

The present invention is devised in view of the above circumstances, and has an object of providing a license information management device capable of managing the license information of the program to be used in each of the two or more control devices in a manner where the work for the program to be made available becomes easier in each of the control devices.

### MEANS FOR SOLVING THE PROBLEM

According to an aspect, a license information management device is provided. The license information management device includes: an input device configured to accept an input of key information including information for validating a program in two or more control devices, the information corresponding to the number of units of the two or more control devices and the program; a communication device configured to transmit the key information input into the input device to an activation server; a storage device; and a controller configured to store the license information in the storage device when the communication device receives, from the activation server, license information being information for making the program available in the two or more control devices, and the license information includes data for making the program available and the number of units information for specifying the number of units of the two or more control devices.

Preferably, the controller is configured to install data for making the program available or a program made available by the data in the control devices, and to update the number of units information in such a way that the number of units of control devices on which the installation is performed is subtracted from the number of units information.

Preferably, the license information management device further includes a media drive configured to communicate with a recording medium detachable to the license information management device. The controller is configured to perform the installation on condition that a specified recording medium is attached to the media drive.

Preferably, the controller is configured to record data for making the program available and the number of units information in the specified recording medium.

Preferably, the controller is configured to record information for specifying the specified recording medium in the storage device, and to perform the installation on condition that information for specifying the specified recording medium recorded in the storage device and information for specifying the recording medium recorded in the recording medium match as well as that the number of units information recorded in the storage device and the number of units information recorded in the recording medium match.

Preferably, the controller is configured to perform the installation on condition that data for making the program available or a program made available by the data is not installed in the control devices.

According to another aspect, a license information management method to be executed by a computer of a license information management device is provided. The license information management method includes: accepting an input of key information including information for validating a program in two or more control devices, the information corresponding to the number of units of the two or more control devices and the program; transmitting the input key information to an activation server; and when license information being information for making the program available in the two or more control devices is received from the activation server, storing the license information in a storage device of the computer. The license information includes data for making the program available, and the number of units information for specifying the number of units of the two or more control devices.

According to still another aspect, a program for license information management to be executed by a computer of a license information management device is provided. The program for license information management causes the computer to execute the steps of: accepting an input of key information including information for validating a program in two or more control devices, the information corresponding to the number of units of the two or more control devices and the program; transmitting the input key information to an activation server; and when license information being information for making the program available in the two or more control devices is received from the activation server, storing the license information in a storage device of the computer. The license information includes data for making the program available, and the number of units information for specifying the number of units of the two or more control devices.

### EFFECT OF THE INVENTION

According to the invention, the license information management device can acquire the information for making the program available in each of the two or more control devices only by once transmitting the key information to the activation server. This facilitates the operation for making the program available in each of a plurality of control devices.

### BRIEF DESCRIPTION OF THE DRAWINGS

Fig. 1 is a diagram schematically illustrating a configuration in a first embodiment of the license management system according to the present invention.
Fig. 2 is a diagram illustrating an example of the hardware configuration of a computer.
Fig. 3 is a diagram illustrating an example of the hardware configuration of a programmable logic controller (PLC).
Fig. 4 is a flowchart of the processing for the computer to acquire the license information from the activation server in the license information management system in the embodiment.
Fig. 5 is a flowchart of the processing for installing the program in the PLC by the computer.
Fig. 6 is a diagram schematically illustrating an aspect of use of a recording medium and computers in a second embodiment.
Fig. 7 is a diagram illustrating an example of the hardware configuration of the computer in the second embodiment.
Figs. 8(A) to 8(D) are diagrams schematically illustrating the information to be treated as the license information in the computers and the recording medium in the second embodiment.
Fig. 9 is a flowchart of the processing that the computer in the second embodiment performs so as to acquire the license information from the activation server.
Fig. 10 is a flowchart of the processing for installing the program in the PLC to be executed in the computer in the second embodiment.

### MODE FOR CARRYING OUT THE INVENTION

The embodiments of the invention will be described in detail with reference to the accompanying drawings. It should be noted that the same or corresponding portions in the drawings are denoted by the same reference numerals, and the description of them will not be repeated.

### [First Embodiment]

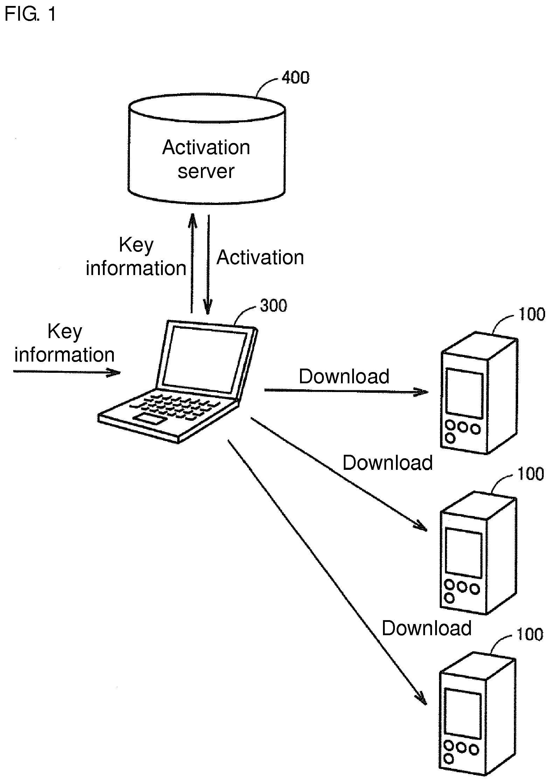

Fig. 1 is a diagram schematically illustrating a configuration in a first embodiment of the license management system according to the present invention. The license management system includes a computer 300, and two or more PLCs 100. The computer 300 is an example of the license information management device. The computer 300 can be implemented by, for example, a general-purpose computer.

The PLC 100 is a device for controlling an FA (Factory Automation) system in the FA system installed in a production site and the like of a production plant. In addition, the PLC 100 is an example of the control device. However, in the embodiment, the control device is not limited to the device for controlling a given device such as the PLC 100 as long as the control device is a device including a processor for running a program

Each PLC 100 downloads the program to be used for control of the FA system from the computer 300. The computer 300 manages the license information of the program to be downloaded by two or more PLCs 100.

More specifically, the user purchases a license for the program to be downloaded to the two or more PLCs 100. This causes the user to obtain the information for downloading the program (hereinafter, referred to as "key information") to the two or more PLCs 100. The key information is obtained by encryption of the data including, for example, the information for specifying the above program and the information for specifying the number of units of PLCs 100. In the embodiment, the key information is also referred to as a "license code".

The user obtaining the key information inputs the key information into the computer 300. In response to this, the computer 300 transmits the key information to the activation server 400. The activation server 400 can be implemented by a typical server including, for example, a device for communicating with an external device and a device including an arithmetic function.

The activation server 400 determines whether the key information is valid. If determining that the key information is valid, the activation server 400 authenticates the computer 300, and performs the activation of the programs for the number of units of the two or more PLCs 100 on the computer 300. More specifically, the activation server 400 transmits the information for using the above program in the two or more PLCs 100 (the license information) to the computer 300. This enables each of the two or more PLCs 100 to download the above program from the computer 300.

The license information means the information for making the program available. An example of the license information is the program data itself. If the program is encrypted to be stored in the computer 300, the license information may be the key for decrypting the program.

In addition, the license information includes the information for specifying the number of units of the PLCs 100 capable of using the above program. It should be noted that the number of units corresponds to the key information.

In the license management system according to the first embodiment, the computer 300 acquires the license information about the program to be installed in two or more PLCs 100 by one activation process (the transmission of the key information to the activation server 400). This enables the user to install the program in the two or more PLCs 100 with one computer 300 even when the two or more PLCs 100 are in the environment where they cannot communicate with the activation server 400, such as the environment where they cannot be connected to the public network.

The activation server 400 is preferable to store the key information used in the authentication (or, the information for specifying the key information) as the already used information. This allows the possibility to be avoided that the authentication is performed a plurality of times by using the same key information.

### <Hardware Configuration of Computer 300>

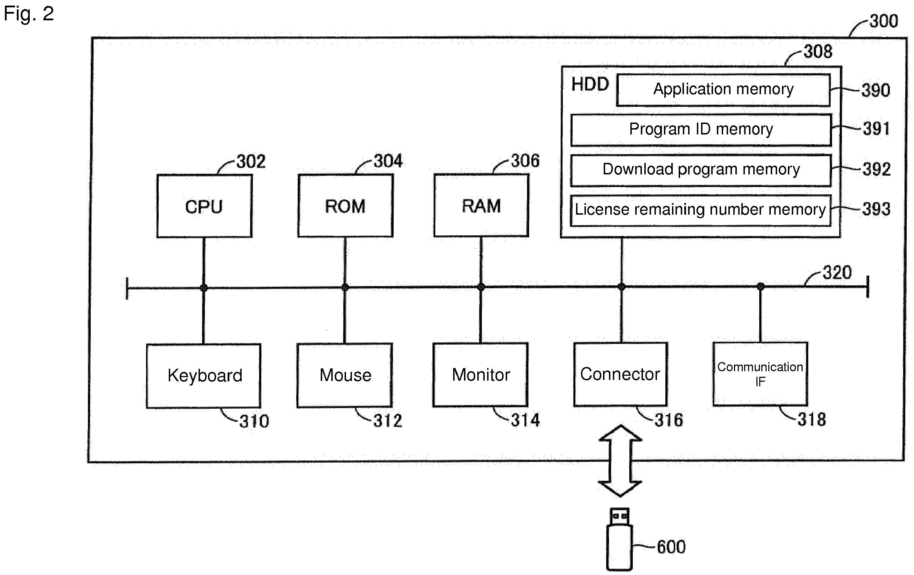

Fig. 2 is a diagram illustrating an example of the hardware configuration of a computer 300. As illustrated in Fig. 2, the computer 300 typically includes a general-purpose computer.

More specifically, as illustrated in Fig. 2, the computer 300 includes a central processing unit (CPU) 302, a read only memory (ROM) 304, a random access memory (RAM) 306, and a hard disk (HDD) 308. The CPU 302 executes various kinds of programs including an operating system (OS). The ROM 304 stores a basic input/output system (BIOS) and various kinds of data. The RAM 306 provides a work area for storing data necessary for executing the program in the CPU 302. The HDD 308 stores the program to be executed by the CPU 302 and the like in a nonvolatile manner. In the control system 1, an example of the controller is configured by the CPU 302 and the RAM 306.

The information for specifying the program to be installed in the PLC 100 (program ID), the program data, and the number of units of the PLCs 100 capable of installing the program may be stored in the hard disk 308. In Fig. 2, the program ID memory 391 indicates the area for storing the program ID. The download program memory 392 indicates the area for storing the program data. The license remaining number memory 393 indicates the area for storing the number of units.

The application for managing the license information of the program to be executed in the PLC 100 is installed in the computer 300. In Fig. 2, the application memory 390 indicates the area for storing the program of the application. The program is recorded in a recording medium detachable to the computer 300, and can be distributed independently of the computer 300 body.

The computer 300 also includes a keyboard 310 and a mouse 312 for accepting the operation from the user, a monitor 314 for presenting information to the user, and a connector 316. The connector 316 is provided for connecting with an external device including a recording medium 600 such as a universal serial bus (USB) memory. The CPU 302 may communicate with an external device such as the recording medium 600 through the connector 316. This allows the CPU 302 to execute the program stored, for example, in the recording medium 600. As to the program to be executed by the computer 300, the program may be downloaded from a higher-level host computer and the like through a network. The computer 300 further includes a communication interface (IF) 318 for communicating with the PLC 100 (CPU unit 104) and the like.

### <Hardware Configuration of PLC 100>

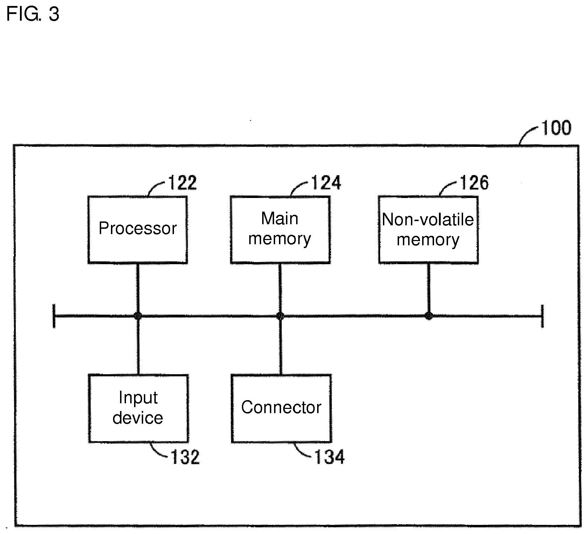

Fig. 3 is a diagram illustrating an example of the hardware configuration of the PLC 100. As illustrated in Fig. 3, the PLC 100 includes a processor 122, a main memory 124, a nonvolatile memory 126, an input device 132, and a connector 134.

The processor 122 controls the operation of the PLC 100 by executing the program stored in the nonvolatile memory 126 and the like. The main memory 124 may be used as a work area of the processor 122. The non-volatile memory 126 stores various kinds of data such as programs. The input device 132 accepts the input of information from the outside, and is constituted, for example, by buttons and the like. The connector 134 is provided for connecting with an external device including a recording medium such as a USB memory. The processor 122 can communicate with an external device through the connector 134.

### <Processing for Acquiring License Information>

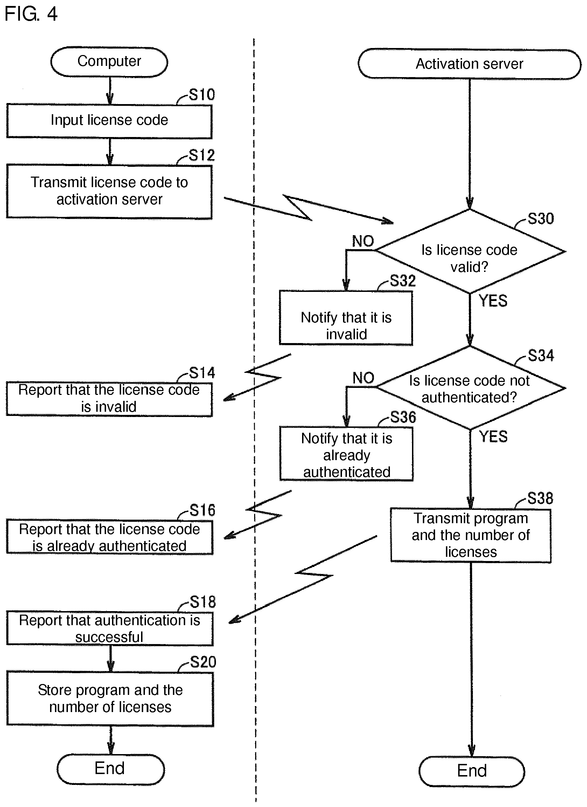

Fig. 4 is a flowchart of the processing for the computer 300 to acquire the license information from the activation server 400 in the license information management system in the embodiment. In Fig. 4, the processing executed on the computer 300 side (left side in Fig. 4) and the processing executed on the activation server 400 side (right side in Fig. 4) are illustrated. The processing to be executed on the computer 300 side is achieved by execution of the application stored, for example, in the application memory 390.

With reference to Fig 4, in step S10, the CPU 302 of the computer 300 accepts the input of the license code through the keyboard 310 and the like (key information). Then, the control is advanced to step S12.

In step S12, the CPU 302 transmits the license code whose input is accepted in step S10 to the activation server 400.

In response to this, in step S30, (the arithmetic unit of) the activation server 400 determines whether the license code transmitted from the computer 300 is valid. The activation server 400 calculates the hash value of the sequence included in, for example, the license code, and then determines the license code to be valid if the hash value is a specific value, and determines the license code not to be valid if the hash value is other than the specific value. The activation server 400 advances the control to step S34 if determining that the license code is valid (YES in step S30), and advances the control to step S32 if determining that the license code is not valid (NO in step S30).

In step S32, the activation server 400 notifies the computer 300 that the license code transmitted by the computer 300 is invalid.

Upon receiving the notification, in step S14, the CPU 302 reports that the license code whose input is accepted in step S10 is invalid. The report can be achieved by display of the message to that effect, for example, on the monitor 314.

On the other hand, in step S34, the activation server 400 determines whether the license code is not yet used in the authentication. As described above, the activation server 400 can store the key information used in the authentication (the license code) (or, the information for specifying the key information) as the already used information. In step S34, the activation server 400 determines whether the license code transmitted from the computer 300 is stored as the information already used in the activation server 400. If determining that the above license code is stored as the information already used, the activation server 400 advances the control to step S36 (NO in step S34). In addition, if determining that the above license code is not stored as the information already used, the activation server 400 advances the control to step S38 (YES in step S34).

In step S36, the activation server 400 notifies the computer 300 that the license code transmitted by the computer 300 is the one already used in the authentication.

Upon receiving the notification, in step S16, the CPU 302 reports that the license code input in step S10 cannot be used because the license code is the information already used in the authentication. The report can be achieved by display of, for example, the message to that effect on the monitor 314.

In step S38, the activation server 400 transmits the license information to the computer 300. The license information to be transmitted is the information for the number of units that the license code corresponds to of the devices to use the program corresponding to the license code transmitted from the computer 300 in step S12. It should be noted that the license code only needs to correspond to the program and the number of units of the PLCs 100, does not directly need to include the information for specifying the program, and does not directly need to include the information for specifying the number of units, either.

Upon receiving the license information, in step S18, the CPU 302 reports that the authentication of the license is successful. The report can be achieved by display of the message to that effect, for example, on the monitor 314. Then, the control is advanced to step S20.

In step S20, the CPU 302 stores the program data into the download program memory 382 based on the license information, stores the number of units of devices capable of installing the program into the license remaining number memory 293, and ends the processing in Fig. 4.

### <Installation of Program>

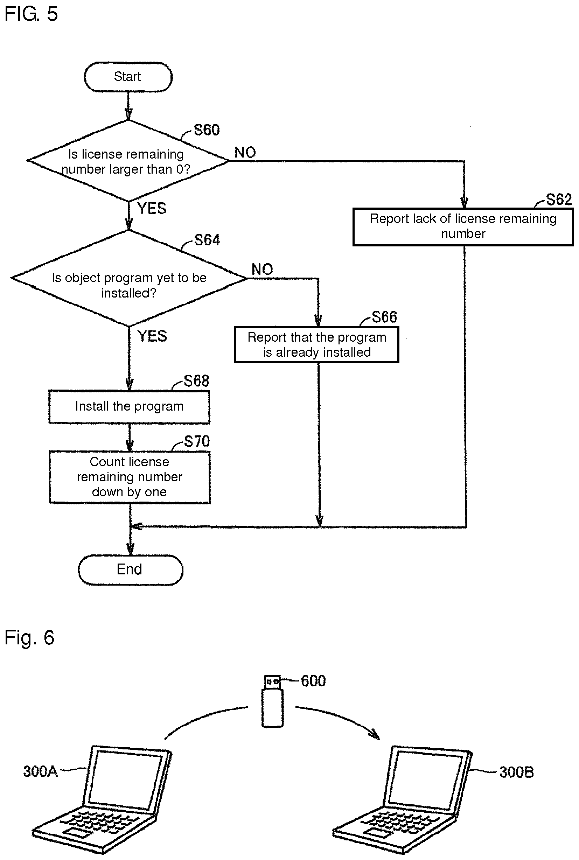

Fig. 5 is a flowchart of the processing for installing the program in the PLC 100 by the computer 300. The CPU 302 starts the processing, for example, via the keyboard 310 and the like on condition that the instruction for starting the installation is input. In addition, the processing is started in a state where the computer 300 is connected to the PLCs 100. The connection may be either wired or wireless. The processing in Fig. 5 is achieved by execution of the application stored, for example, in the application memory 390.

With reference to Fig. 5, in step S60, the CPU 302 determines whether or not the number of units stored in the license remaining number memory 393 (license remaining number) is larger than zero. Then, the CPU 302 advances the control to step S64 if determining that the number of units is larger than zero (YES in step S60), and advances the control to step S62 if determining that the number of units is zero or less (NO in step S60).

The value of the number of units to be stored in the license remaining number memory 393 is registered as the maximum number permitted from the activation server 400 in step S20 (see Fig. 4). Then, the value of the number of units is counted down by "1" in step S70 described below each time the program is installed in a PLC 100.

In step S62, the CPU 302 reports that the license remaining number is insufficient, and ends the processing in Fig. 5. The report can be achieved by display of the message to that effect, for example, on the monitor 314.

In step S64, the CPU 302 determines whether the program to be the object of installation in the PLC 100 is not installed yet in the PLC 100. The determination is based on whether a program having the same file name and version as the program is stored, for example, in the non-volatile memory 126 of the PLC 100. The CPU 302 advances the control to step S68 if determining that the program is not installed yet in the PLC 100 (YES in step S64), and advances the control to step S66 if determining that the program is already installed.

In step S66, the CPU 302 reports that the program is already installed in the PLC 100 in which the CPU 302 tries to install the program of the object, and ends the processing in Fig. 5. The report can be achieved by display of the message to that effect, for example, on the monitor 314.

In step S68, the CPU 302 installs the program of the object in the PLC 100. Then, the control is advanced to step S70.

In step S70, the CPU 302 counts the number of units stored in the license remaining number memory 393 (the license remaining number) down by one, and ends the processing in Fig. 5.

In the first embodiment described above, the computer 300 acquires the information for using the program and the information for specifying the number of units of the PLCs 100 capable of using the program by one-time activation. The PLC 100 has the program installed from the computer 300. The number of units specified by the information is updated in such a way that as many as the number of units of the PLCs 100 in which the computer 300 installs the program is subtracted from the number of units specified by the information.

In the first embodiment, as a specific example of when the program is installed in the PLC 100 from the computer 300, the download of the program data is described. It should be noted that when the program data is encrypted to be stored, for example, in the PLC 100, the key of the encryption may be downloaded from the computer 300 to the PLC 100 instead of the program data itself being downloaded.

### [Second Embodiment]

In the second embodiment, the license information is managed by a computer 300 and a recording medium 600. More specifically, the computer 300 performs the program installation described with reference to Fig. 5 on condition that the recording medium 600 is attached to the computer 300. The license information is stored in both the computer 300 and the recording medium 600.

Fig. 6 is a diagram schematically illustrating an aspect of use of the recording medium 600 and the computers 300 in the second embodiment. In the second embodiment, furthermore, as illustrated in Fig. 6, the license information used in a computer 300 (computer 300A in Fig. 6) can be taken over to another computer 300 (computer 300B in Fig. 6) by the recording medium 600 being used.

### <Configuration of Computer 300>

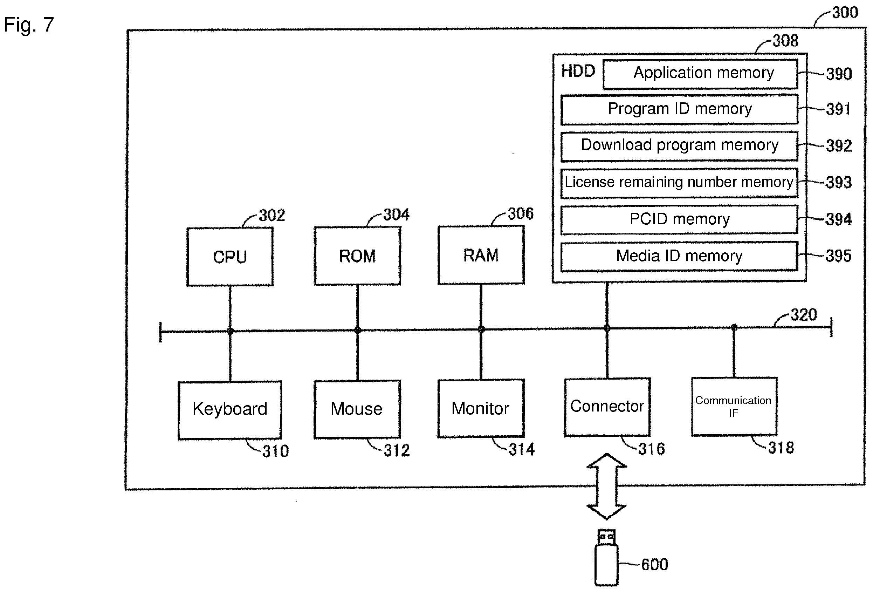

Fig. 7 is a diagram illustrating an example of the hardware configuration of the computer 300 in the second embodiment. As illustrated in Fig. 7, the hardware configuration of the computer 300 of the second embodiment can be made the same as the hardware configuration of the computer 300 of the first embodiment.

In the HDD 308 of the computer 300 of the second embodiment, the information for specifying the computer 300 itself and the information for specifying the recording medium 600 are further stored. In Fig. 7, the PCID memory 394 indicates an area for storing the information for specifying the computer 300 itself. The media ID memory 395 indicates an area for storing the information for specifying the recording medium 600.

### <Summary of Management of License Information>

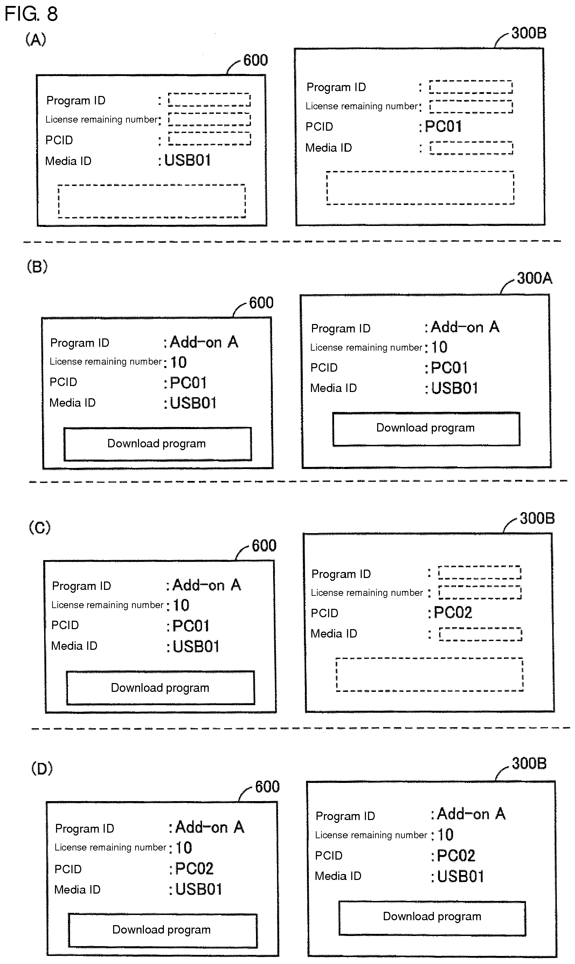

Figs. 8(A) to 8(D) are diagrams schematically illustrating the information to be treated as the license information in the computers 300 and the recording medium 600 in the second embodiment. In Figs. 8(A) to 8(D), four states of the computers 300 and the recording medium 600 are indicated as (A) to (D). In Figs. 8(A) to 8(D), two computers 300 are illustrated as the computer 300A and the computer 300B. In Figs. 8(A) and 8(B), the combination of the first computer 300A and the recording medium 600 is illustrated. In Figs. 8(B) and 8(C), the combination of the second computer 300B and the recording medium 600 is illustrated.

First, with reference to Fig. 8(A), the computer 300A may store the respective values of the "program ID", the "license remaining number", the "PCID", the "media ID", and the "download program". In the state illustrated in Fig. 8(A), the computer 300A stores only the value of the "PCID" among these. The "PCID" is the information for specifying the computer 300A, and is stored in the PCID memory 394. The "PCID" may be registered in the PCID memory 394 at the factory shipment of the computer 300A, at the start of use of the computer 300A by the user, or the like.

In addition, as with the computer 300A, the recording medium 600 may store the respective values of the "program ID", the "license remaining number", the "PCID", the "media ID", and the "download program". In the state illustrated in Fig. 8(A), the recording medium 600 stores only the value of the "media ID" among these. The "media ID" is the information for specifying the recording medium 600. The recording medium 600 may be any type of recording medium such as a USB memory, and an SD (Secure Digital) memory card. The "media ID" is stored in the recording medium 600 before being used in the license information management system of the second embodiment, such as at the factory shipment of the recording medium 600.

Next, with reference to Fig. 8(B), the computer 300A stores the values of the "program ID", the "license remaining number", the "PCID", the "media ID", and the "download program".

The "program ID" is the information for specifying the program to be installed in the PLC 100, and is stored in the program ID memory 391.

The "license remaining number" is the remaining number of the PLCs 100 capable of installing the program, and is stored in the license remaining number memory 393.

The "download program" is the program data to be installed in the PLC 100, and is stored in the download program memory 392.

The computer 300A acquires the values of the "program ID", the "license remaining number", and the "download program", for example, by acquiring the license information from the activation server 400. In addition, the computer 300A acquires the value of the "media ID" from the recording medium 600.

In the state illustrated in Fig. 8(B), the values of the "program ID", the "license remaining number", the "PCID", the "media ID", and the "download program" are stored also in the recording medium 600. The values of the "program ID", the "license remaining number, the "PCID", and the "download program" are written by the computer 300A.

When the computer 300A is no longer available due to a failure or a loss, the user connects the recording medium 600 connected to the computer 300A to the other computer 300B. In Fig. 8(C), the state where the recording medium 600 illustrated in Fig. 8(B) is connected to the computer 300B in which the license information is not registered is illustrated.

In the state illustrated in Fig. 8(C), the data recorded in the recording medium 600 are the same as in the state illustrated in Fig. 8(B).

On the other hand, in the state illustrated in Fig. 8(C), the computer 300B stores the value of only the "PCID" as with the computer 300A in the state illustrated in Fig. 8(A). It should be noted that the value of the "PCID" of the computer 300A is "PC01 ", whereas the value of the "PCID" of the computer 300B is "PC02". That is, the value of the "PCID" of the computer 300B is different from the value of the "PCID" of the computer 300A.

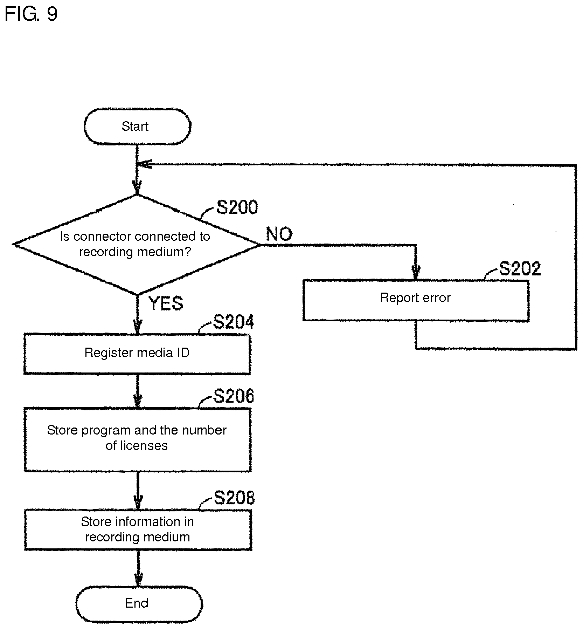

As will be described below with reference to Fig. 9, the computer 300B can store the license information stored in the recording medium 600 in the computer 300B by executing the processing for installing the program in the PLC 100. This enables the computer 300B to store the information illustrated in Fig. 8(D). More specifically, as illustrated in Fig. 8(D), the computer 300B copies the "program ID", the "license remaining number", the "media ID", and the "download program" stored in the recording medium 600 to the computer 300B.

The computer 300B also writes the "PCID" of the computer 300B in the recording medium 600. This allows the "PC02" in the computer 300B, instead of the "PC01" in the computer 300A, to be stored in the recording medium 600 as the value of the "PCID" in the state illustrated in Fig. 8(D).

As described above with reference to Figs. 8(A) to 8(D), in the license information management system of the second embodiment, the license information can be taken over from a computer 300A to another computer 300B by using the information stored in the recording medium 600.

### <Processing for Acquiring License Information>

With reference to Fig. 9, how the data illustrated in Fig. 8(A) are stored in the computer 300A and the recording medium 600 will be described. Fig. 9 is a flowchart of the processing that the computer 300 of the second embodiment performs so as to acquire the license information from the activation server 400. The processing illustrated in Fig. 9 corresponds to the control of step S20 in Fig. 4. That is, the processing illustrated in Fig. 9 is started, for example, in response to the computer 300 (computer 300A) receiving the license information from the activation server 400.

With reference to Fig. 9, in step S200, the CPU 302 of the computer 300A determines whether the recording medium 600 is connected to the connector 316. Then, the CPU 302 advances the control to step S204 if determining that the recording medium 600 is connected (YES in step S200), and advances the control to step S202 if determining that the recording medium 600 is not connected (NO in step S200).

In step S202, the CPU 302 reports an error to return the control to step S200. That is, in the processing in Fig. 9, as long as the recording medium 600 is not connected to the connector 316 of the computer 300A, the control in step S204 and thereafter is not performed.

In step S204, the CPU 302 registers the ID of the recording medium 600 connected to the connector 316 in the media ID memory 395 as the media ID. Then, the control is advanced to step S206.

In step S206, as with step S20 in Fig. 4, the CPU 302 stores the program in the download program memory 392, and stores the number of the licenses (the number of units) in the license remaining number memory 393. Then, the control is advanced to step S208. In addition, in step S206, the CPU 302 stores the program ID in the program ID memory 391. It should be noted that the program ID may be stored in step S10 in Fig. 4.

In step S208, the "program ID", the "license remaining number", the "PCID", and the "download program" are written in the recording medium 600. Then, the processing in Fig. 9 ends.

### <Installation of Program>

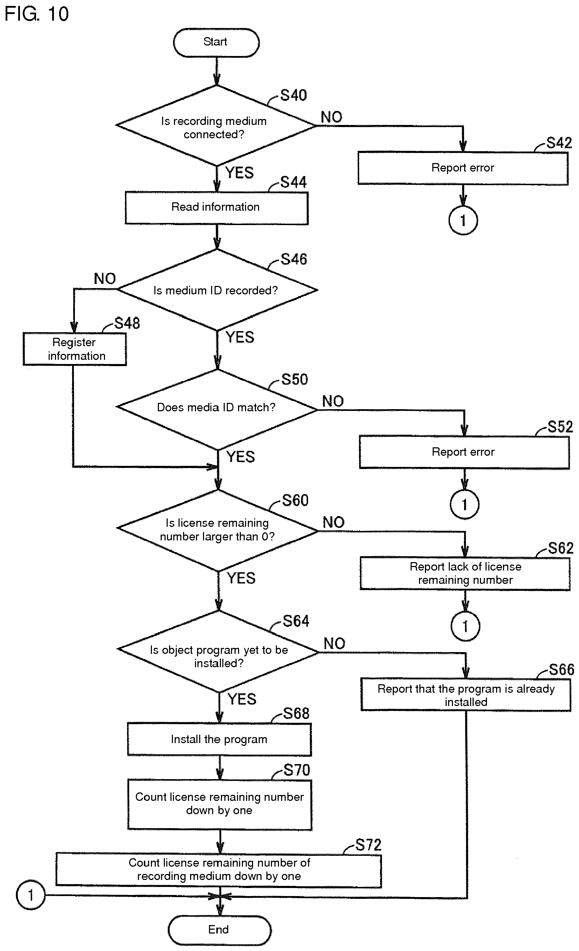

Fig. 10 is a flowchart of the processing for installing the program in the PLC 100 to be executed in the computer 300 in the second embodiment. The CPU 302 starts the processing, for example, via the keyboard 310 and the like on condition that the instruction for starting the installation is input. In addition, the processing is started in a state where the computer 300 is connected to the PLCs 100. The connection may be wired or wireless. The processing in Fig. 10 is achieved by execution of the application stored, for example, in the application memory 390.

With reference to Fig. 10, in step S40, the CPU 302 determines whether the recording medium 600 is connected to the connector 316. Then, the CPU 302 advances the control to step S44 if determining that the recording medium 600 is connected (YES in step S40), and advances the control to step S42 if determining that the recording medium 600 is not connected (NO in step S40).

In step S42, the CPU 302 reports an error due to the recording medium 600 being not connected, and ends the processing in Fig. 10. The report can be achieved by display of the corresponding message, for example, on the monitor 314.

In step S44, the CPU 302 reads the information recorded in the recording medium 600. The Information to be read is the values of the "program ID", the "license remaining number", the "PCID", the "media ID", and the "download program" described with reference to Figs. 8(A) to 8(D). Then, the control is advanced to step S46.

In step S46, the CPU 302 determines whether the value of the "media ID" is recorded in the media ID memory 395 of the computer 300 (where the CPU 302 is mounted). Then, the CPU 302 advances the control to step S50 if determining that the value of the "media ID" is recorded (YES in step S46), and advances the control to step S48 if determining that the value of the "media ID" is not recorded (NO in step S46).

In step S48, the CPU 302 reads the "program ID", the "license remaining number", the "media ID", and the "download program" from the recording medium 600, and writes them respectively in the program ID memory 391, the license remaining number memory 393, the media ID memory 395, and the download program memory 392. In addition, the CPU 302 writes the "PCID" recorded in the PCID memory 394 in the recording medium 600. The control of step S48 corresponds to the change from Fig. 8(C) to Fig. 8(D). Then, the control is advanced to step S60.

In step S50, the CPU 302 determines whether the "media ID" read from the recording medium 600 matches the media ID recorded in the media ID memory 395. Then, the CPU 302 advances the control to step S60 if determining that they match (YES in step S50), and advances the control to step S52 if determining that they do not match (NO in step S50).

In step S52, the CPU 302 reports that an invalid recording medium 600 is connected, and ends the processing in Fig. 10. The report can be achieved by display of the message to that effect, for example, on the monitor 314.

The control of steps S60 to S70 may be performed in the same manner as the control corresponding to the processing in Fig. 5.

More specifically, in step S60, the CPU 302 determines whether the license remaining number recorded in the license remaining number memory 393 is larger than zero. Then, the CPU 302 advances the control to step S64 if determining that the license remaining number is larger than zero (YES in step S60), and advances the control to step S62 if determining that the license remaining number is zero or less (NO in step S60).

In step S62, the CPU 302 reports that the license remaining number is insufficient for installation of the program, and ends the processing in Fig. 10. The report can be achieved by display of, for example, the message to that effect on the monitor 314.

In step S64, the CPU 302 determines whether the program to be the object of installation in the PLC 100 is not installed yet in the PLC 100. Then, the CPU 302 advances the control to step S68 if determining that the program is not installed yet in the PLC 100 (YES in step S64), and advances the control to step S66 if determining that the program is already installed.

In step S66, the CPU 302 reports that the program is already installed in the PLC 100 in which the CPU 302 tries to install the program of the object, and ends the processing in Fig. 10. The report can be achieved by display of the message to that effect, for example, on the monitor 314.

In step S68, the CPU 302 installs the program of the object in the PLC 100. Then, the control is advanced to step S70.

In step S70, the CPU 302 counts the license remaining number stored in the license remaining number memory 393 down by one. Then, the control is advanced to step S72.

In step S72, the CPU 302 counts the value of the license remaining number recorded in the recording medium down by one, and ends the processing in Fig. 10.

As described above, in the processing described with reference to Fig. 9, the control in step S200 and thereafter is performed on condition that the recording medium 600 is connected to the computer 300. It should be noted that even without being connected to the recording medium 600, the computer 300 may acquire the license information from the activation server 400 (step S208). For example, without being connected to the recording medium 600, the computer 300 acquires the license information from the activation server 400. After acquiring the license information, the computer 300 performs the preliminary processing for writing the license information acquired from the activation server 400 in the recording medium 600. The processing illustrated in Fig. 10 becomes executable, for example, on condition that the preliminary processing is already executed.

It should be considered that the embodiments disclosed herein are merely illustrative in all respects, and are not intended to be limiting. The scope of the invention is indicated by the claims, rather than the description above, and is intended to include all modifications within the meaning and range of equivalency of the claims.

### DESCRIPTION OF SYMBOLS

- 100: PLC
- 122: processor
- 124: main memory
- 126: non-volatile memory
- 132: input device
- 134, 316: connector
- 300: computer
- 302: CPU
- 308: HDD
- 390: application memory
- 391: program ID memory
- 392: download program memory
- 393: license remaining number memory
- 394: PCID memory
- 395: media ID memory
- 400: activation server
- 600: recording medium

## Claims

1. A license information management device comprising:
an input device configured to accept an input of key information including information for validating a program in two or more control devices, the information corresponding to the number of units of the two or more control devices and the program;
a communication device configured to transmit the key information input into the input device to an activation server;
a storage device; and
a controller configured to store the license information in the storage device when the communication device receives license information being information for making the program available in the two or more control devices from the activation server,
wherein the license information includes data for making the program available, and the number of units information for specifying the number of units of the two or more control devices.

2. The license information management device according to claim 1, wherein the controller is configured to
install the data for making the program available or a program made available by the data in the control devices, and
update the number of units information in such a way that the number of units of control devices on which the installation is performed is subtracted from the number of units information.

3. The license information management device according to claim 2,
further comprising a media drive configured to communicate with a recording medium detachable to the license information management device, and
wherein the controller is configured to perform the installation on condition that a specified recording medium is attached to the media drive.

4. The license information management device according to claim 3, wherein the controller is configured to record the data for making the program available and the number of units information in the specified recording medium.

5. The license information management device according to claim 4, wherein the controller is configured to
record information for specifying the specified recording medium in the storage device, and
configured to perform the installation on condition that information for specifying the specified recording medium recorded in the storage device and information for specifying the recording medium recorded in the recording medium match as well as that the number of units information recorded in the storage device and the number of units information recorded in the recording medium match.

6. The license information management device according to any one of claims 2 to 5, wherein the controller is configured to perform the installation on condition that the data for making the program available or the program made available by the data is not installed in the control devices.

7. A license information management method to be executed by a computer of a license information management device, the method comprising:
accepting an input of key information including information for validating a program in two or more control devices, the information corresponding to the number of units of the two or more control devices and the program;
transmitting the input key information to an activation server; and
when license information being information for making the program available in the two or more control devices is received from the activation server, storing the license information in a storage device of the computer,
wherein the license information includes data for making the program available, and the number of units information for specifying the number of units of the two or more control devices.

8. A program for license information management to be executed by a computer of a license information management device,
the program causing the computer to execute the steps of:
accepting an input of key information including information for validating a program in two or more control devices, the information corresponding to the number of units of the two or more control devices and the program;
transmitting the input key information to an activation server; and
when license information being information for making the program available in the two or more control devices is received from the activation server, storing the license information in a storage device of the computer,
wherein the license information includes data for making the program available, and the number of units information for specifying the number of units of the two or more control devices.
